## Europäisches Patentamt

## European Patent Office

## Office européen des brevets

(11) Numéro de publication: **0 191 686**
**B1**

# FASCICULE DE BREVET EUROPÉEN

(45) Date de publication du fascicule du brevet:
**19.04.89**

(21) Numéro de dépôt: **86400188.8**

(22) Date de dépôt: **29.01.86**

(51) Int. Cl.⁴: **G 09 B 9/08 //**
**F41G9/00**

(54) **Simulateur pour une installation de localisation et de guidage d'un mobile aérien et installation de ce type pourvue d'un tel simulateur.**

(30) Priorité: **08.02.85 FR 8501843**

(43) Date de publication de la demande:
**20.08.86 Bulletin 86/34**

(45) Mention de la délivrance du brevet:
**19.04.89 Bulletin 89/16**

(84) Etats contractants désignés:
**DE GB IT**

(56) Documents cité:
**US-A-3 514 521**
**US-A-3 783 172**
**US-A-3 784 800**

**ADVANCES IN INSTRUMENTATION, vol. 38, partie 1, octobre 1983, pages 243-260, ISA, US; D. E. BUTLER et al.: "From early flight trainers to modern utility power plant simulation"**
**MACHINE DESIGN, vol. 50, no. 14, juin 1978, pages 20-25; C.E. WISE: "Fighter of the future poised for flight"**
**AVIATION WEEK & SPACE TECHNOLOGY, vol. 112, no. 4, janvier 1980, pages 54-63; B.M. ELSON: "Mini-RPV being developed for army"**
**EDN MAGAZINE, vol. 26, no. 4, février 1981, pages 91-97; R.H. CUSHMAN: "Use digital simulation to gain design expertise"**

(73) Titulaire: **AEROSPATIALE SOCIETE NATIONALE INDUSTRIELLE, 37, Boulevard de Montmorency, F-75781 Paris Cédex 16 (FR)**

(72) Inventeur: **Chassaigne, Georges, 49, rue de Verdun, F-33130 Begles (FR)**
Inventeur: **Saffores, Jean Robert, 5, rue des Caravelles, F-33160 Martignas (FR)**

(74) Mandataire: **Bonnetat, Christian, Cabinet PROPI Conseils 23 rue de Léningrad, F-75008 Paris (FR)**

## Description

La présente invention concerne un simulateur pour une installation destinée à la localisation et au guidage d'un mobile aérien autopropulsé et télécommandé, ainsi qu'une telle installation pourvue de ce simulateur.

On connaît déjà une installation de ce type comportant:
- des moyens de calcul électronique ;
- des moyens pour la localisation en continu dudit mobile au cours de son vol, comportant au moins un radar et un pupitre radar, destiné à la commande et à l'exploitation des informations dudit radar;
- des moyens pour l'affichage de la carte d'une région géographique devant être survolée par ledit mobile;
- des moyens pour l'affichage d'une trajectoire prédéterminée théorique que doit suivre ledit mobile au cours de son vol, ladite trajectoire prédéterminée théorique étant superposée à ladite carte;
- des moyens pour tracer progressivement la trajectoire réelle suivie par ledit mobile au fur et à mesure du déroulement du vol de celui-ci, ladite trajectoire réelle étant superposée à ladite carte; et
- des moyens de télécommande pour agir sur la position dudit mobile en cours de vol, afin que ladite trajectoire réelle soit aussi proche que possible de ladite trajectoire prédéterminée théorique, lesdits moyens de télécommande comportant un émetteur et au moins un pupitre de télécommande dudit émetteur.

Une telle installation est par exemple destinée à surveiller constamment le vol programmé d'un missile afin que celui-ci ne s'égare pas et ne risque pas de créer des accidents en poursuivant son vol après avoir dévié de son vol programmé et échappé au contrôle d'un operateur qui le télécommande.

Bien entendu, pour être efficaces, les opérateurs servant une telle installation doivent être entraînés. Or, l'entraînement par le fonctionnement normal de l'installation soulève des difficultés. Tout d'abord, cela nécessite le tir d'un missile, ce qui est toujours onéreux et nécessite des mesures de précaution contraignantes et des autorisations administratives, parfois difficiles à obtenir, à cause des perturbations qu'un tel tir de missile peut apporter, par exemple dans le trafic aérien. Il en résulte que bien souvent le missile est remplacé par un aéronef, par exemple un hélicoptère. Cependant, dans ce cas l'entraînement des opérateurs n'est pas optimal, puisque les conditions de vol d'un hélicoptère sont très différentes de celles d'un missile. Il ne s'agit donc là que d'un pis-aller, qui, de toutes façons, ne résout pas tous les problèmes. En effet, il est malgré tout nécessaire de prendre des précautions et d'obtenir des autorisations administratives pour que le vol de l'hélicoptère cible ne risque pas d'être une gêne pour le trafic aérien normal et pour que les liaisons électromagnétiques entre l'installation et l'hélicoptère ne pertube pas les transmissions radio transitant par la zone dans laquelle a lieu l'entraînement desdits opérateurs.

La présente invention a pour objet de remédier à ces inconvénients.

A cette fin, selon l'invention, le simulateur pour l'installation du type rappelé ci-dessus, est remarquable en ce qu'il comporte des moyens pour simuler ledit radar, ledit mobile aérien et ledit émetteur de télécommande et en ce qu'il peut être relié, à la place dudit radar et dudit émetteur de télécommande respectivement, à l'entrée dudit pupitre radar et à la sortie dudit pupitre de télécommande, au moyen d'un système de commutation.

Ainsi, selon l'invention, l'entraînement des opérateurs de l'installation peut se faire au moyen de celle-ci, de sorte que lesdits opérateurs peuvent se familiariser avec ses divers éléments, sans toutefois que le fonctionnement de l'installation en entraînement nécessite le vol réel d'un mobile aérien et des liaisons électromagnétiques entre l'installation et un tel mobile. En phase d'entraînement, l'installation fonctionne donc isolément, bouclée sur elle-même. Le simulateur selon l'invention permet donc d'assurer et de contrôler la formation des opérateurs dans des conditions semblables à celles de l'utilisation normale de l'installation.

De préférence, le simulateur selon l'invention comporte des moyens pour engendrer pas à pas une trajectoire simulée apparaissant à la place de ladite trajectoire réelle en superposition à ladite carte et des moyens pour introduire des modifications inopinées dans ladite trajectoire simulée.

Ainsi, un instructeur peut introduire des modifications à ladite trajectoire simulée, au fur et à mesure du tracé de celle-ci, afin de tester les réactions du ou des opérateurs.

Afin que cet instructeur puisse occuper un poste de travail, séparé, disposé à distance du poste de travail des opérateurs en cours d'entraînement, il est avantageux que ledit simulateur comporte des moyens d'affichage auxiliaires sur lesquels apparaissent également ladite carte, ladite trajectoire théorique prédéterminée et la trajectoire simulée, modifiable par les moyens d'introduction de modification.

De préférence, lesdits moyens pour engendrer la trajectoire simulée comportent un micro-ordinateur. Dans ce cas, ils comportent alors un dispositif d'interface en liaison, d'une part, avec ledit micro-ordinateur, d'autre part, avec ledit pupitre du radar et ledit pupitre de télécommande.

La présente invention concerne également une installation pourvue d'un simulateur du type décrit ci-dessus.

L'installation, selon l'invention, destinée à la localisation et au guidage d'un mobile aérien autopropulsé télécommandé et comprenant:

- des moyens de calcul électronique;
- des moyens pour la localisation en continu dudit mobile au cours de son vol, comportant au moins un radar et un pupitre radar, destiné à la commande et à l'exploitation des informations dudit radar;
- des moyens pour l'affichage de la carte d'une région géographique devant être survolée par ledit mobile;
- des moyens pour l'affichage d'une trajectoire prédéterminée théorique que doit suivre ledit mobile au cours de son vol, ladite trajectoire prédéterminée théorique étant superposée à ladite carte;
- des moyens pour tracer progressivement la trajectoire réelle suivie par ledit mobile au fur et à mesure du déroulement du vol de celui-ci, ladite trajectoire réelle étant superposée à ladite carte; et
- des moyens de télécommande pour agir sur la position dudit mobile en cours de vol, afin que ladite trajectoire réelle soit aussi proche que possible de ladite trajectoire prédéterminée théorique, lesdits moyens de télécommande comportant un émetteur et au moins un pupitre de télécommande dudit émetteur, est remarquable en ce qu'elle comporte un simulateur susceptible de simuler ledit radar, ledit mobile aérien et ledit émetteur de télécommande ainsi qu'un système de commutation susceptible de relier ledit simulateur à l'entrée dudit pupitre radar et à la sortie dudit pupitre de télécommande, respectivement à la place dudit radar et dudit émetteur de télécommande.

Les figures du dessin annexé feront bien comprendre comment l'invention peut être réalisée. Sur ces figures, des références identiques désignent des éléments semblables.

La figure 1 est une vue en perspective d'un exemple de réalisation d'installation, auquel s'applique la présente invention.

La figure 2 est le schéma synoptique électronique de l'exemple de réalisation d'installation de la figure 1, dans lequel, à des fins de simplification, on n'a pas représenté les liaisons des différents éléments avec le calculateur de ladite installation.

La figure 3 donne un exemple d'image affichée par les moyens de visualisation graphique de ladite installation.

La figure 4 donne le schéma synoptique, comparable à celui de la figure 2, de l'exemple de réalisation de cette dernière figure, modifié pour incorporer le simulateur conforme à la présente invention.

La figure 5 donne le schéma synoptique d'un mode de réalisation du simulateur selon l'invention.

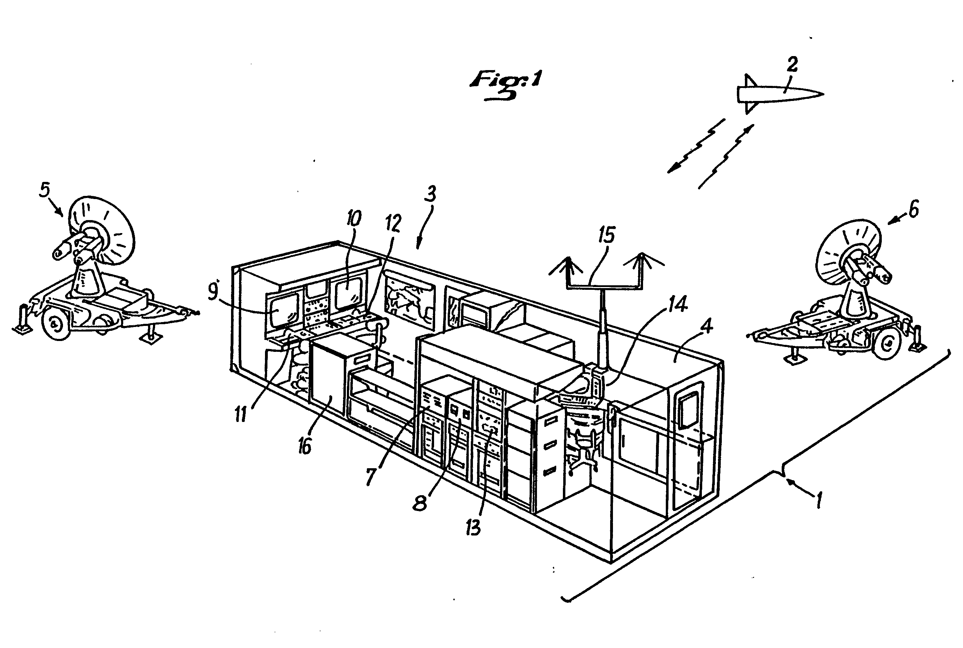

L'installation montrée par la figure 1 est destinée à localiser et guider un mobile aérien 2. Ce mobile aérien 2 est par exemple un missile militaire de reconnaissance qui est pourvu de moyens de propulsion autonomes et qui, après avoir décollé d'un territoire "ami", doit effectuer un vol au-dessus d'un territoire "ennemi" en suivant une trajectoire prédéterminée, pour revenir en territoire "ami", où il atterrit et livre les informations qu'il a pu recueillir au cours de son vol. Une telle installation est principalement utilisée en temps de paix, pour l'entraînement des personnels chargés d'exploiter lesdites informations, afin de permettre la recupération dudit missile 2 à chaque tir; à cet effet, l'installation 1 a pour objet principal d'obliger le missile 2 à suivre au mieux cette trajectoire prédéterminée et à l'empêcher de s'écarter par trop de celle-ci jusqu'à se perdre, notamment à cause des conditions aérologiques du vol. En effet, en temps de guerre, les ondes électromagnétiques engendrées et reçues par l'installation 1 risqueraient de permettre à l'ennemi la détection de l'installation 1 et du missile 2, et donc de faciliter leur destruction. Par suite, en temps de guerre, le missile 2 est tiré, après quoi il doit suivre seul, sans être guidé, sa trajectoire prédéterminée. On prend alors volontairement le risque que, si les conditions aérologiques de vol ont pour effet d'écarter beaucoup le missile 2 de sa trajectoire prédéterminée, ledit missile ne revienne pas en territoire ami et soit perdu.

Bien entendu, l'installation 1 connaît la trajectoire prédéterminée que doit suivre le missile 2 et elle fournit à un opérateur les indications nécessaire pour que celui-ci puisse, par télécommande, éventuellement corriger le vol réel du missile pour que la trajectoire réelle de ce dernier soit aussi proche que possible de la trajectoire prédéterminée.

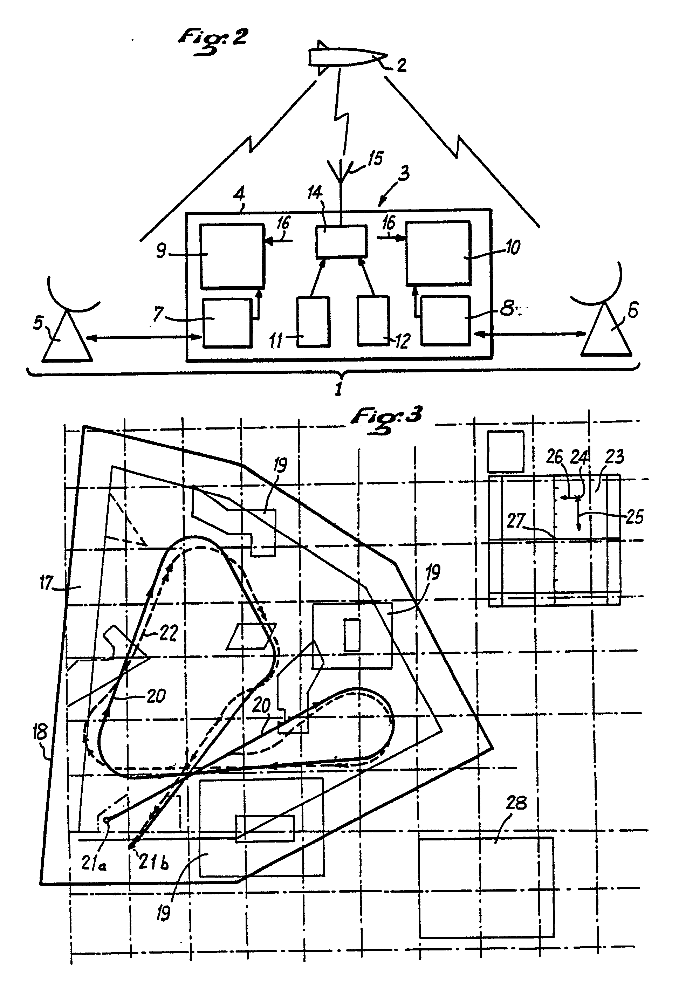

L'exemple de réalisation de l'installation 1, montré par les figures 1 et 2, comporte une unité électronique 3 rassemblée dans un caisson 4, par exemple monté sur un véhicule, et deux radars 5 et 6. L'unité électronique 3 comporte deux pupitres radar 7 et 8, respectivement associés au radar 5 et au radar 6 et à des dispositifs de visualisation graphique respectifs 9 ou 10. Cette unité électronique 3 comporte de plus deux pupitres de télécommande 11 et 12, associés à une baie de télécommande 13 et actionnant un émetteur de télécommande 14, qui est susceptible d'agir sur le vol du missile 2, par l'intermédiaire d'un système d'antenne 15. Qn calculateur 16 pilote l'ensemble de l'installation et comporte en mémoire des informations concernant des régions géographiques susceptibles d'être survolées par le missile 2 et des trajectoires théoriques de celui-ci dans lesdites régions.

On remarquera que, dans l'exemple de réalisation montré, on prévoit deux chaînes radar et de visualisation (5, 7, 9 et 6, 8, 9), ainsi que deux chaînes de télécommande 11, 14, 15 et 12, 14, 15. Cette duplication est destinée à permettre la redondance des fonctions de localisation, de trajectographie et de télécommande, afin d'assurer en toute sécurité la surveillance du volume de vol du missile 2 et d'éviter que la défaillance de l'une de ces fonctions pendant le vol ne compromette cette surveillance. Bien entendu, une telle redondance n'est pas essentielle au simulateur selon l'invention, qui peut être mis en oeuvre pour une installation ne comportant qu'une seule chaîne de radar et de visualisation et qu'une seule chaîne de télécommande.

Les radars 5 et 6 sont du type radar de poursuite et sont chargés d'acquérir la position du missile 2 en vol ; ils fournissent leurs informations aux pupitres radar 7 et 8 correspondant et ces informations sont par exemple constituées par le site, le gisement et la distance dudit missile 2.

Ces informations sont traitées par les pupitres et affichées dans des fenêtres de visualisation des dispositifs 9 et 10. Les radars 5 et 6 comportent de plus, de façon connue, des circuits de synchronisation d'horloges et de traitement de signal vidéo, qui transmettent leurs informations aux pupitres radar 7 et 8.

Les pupitres radar 7 et 8 sont des postes de travail, chargés de permettre la visualisation du missile en vol. Ils comportent une pluralité de commandes et de visualisations permettant:

- de positionner le système d'antenne radar 5 et 6 en site;
- de positionner le système d'antenne radar 5 et 6 en gisement;
- de visualiser l'écho, le site, le gisement et la distance du missile 2;
- de piloter une chaîne de télémétrie;
- d'identifier des pannes;
- d'assurer la poursuite du missile 2 en vol.

Au moment du tir du missile 2, les radars 5 et 6 fonctionnent en mode manuel de recherche de cible, c'est-à-dire d'acquisition du missile 2. Dès que celui-ci est acquis par les radars 5 et 6, ces derniers fonctionnent alors (ainsi que la télémétrie) en mode automatique de poursuite. Ils suivent alors automatiquement le missile 2 en vol. Par exemple, ils analysent toutes les millisecondes les écarts entre l'ancienne position et la nouvelle position du missile 2, de façon à se commander eux-mêmes.

A partir des informations de site et de gisement qu'ils reçoivent des radars 5 et 6, les pupitres radar 7 et 8 calculent les coordonnées cartésiennes du missile 2, qu'ils adressent aux dispositifs 9 et 10 de visualisation graphique.

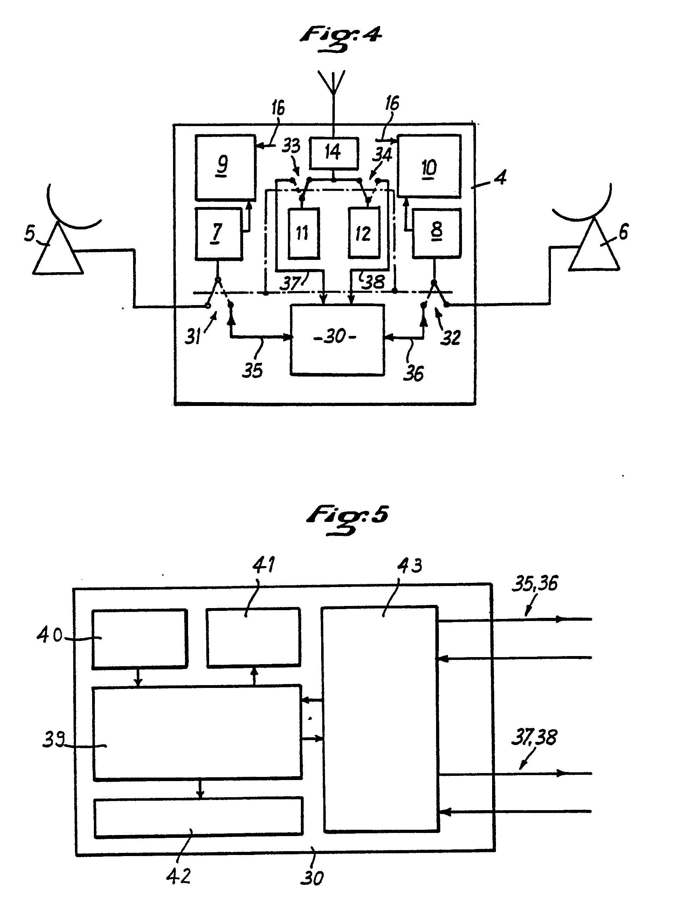

Les dispositifs 9 et 10 de visualisation graphique sont également des postes de travail. Ils sont pourvus chacun d'un écran sur lequel ils affichent (voir la figure 3):

- un fond de carte géographique 17 correspondant à la région survolée par le missile 2 et emmagasinée dans le calculateur 16; le domaine de survol est limité par une frontière 18 et la carte 17 comporte des zones 19 de repère;

- une trajectoire 20, prédéterminée et emmagasinée dans le calculateur 16; le missile doit théoriquement suivre cette trajectoire 20 au cours de sa mission, entre son point de décollage 21a et son point d'atterrissage 21b.

- la trajectoire réelle 22 suivie par le missile 2 pendant son vol, et tracée au fur et à mesure de celui-ci. Cette trajectoire réelle 22 est susceptible de s'écarter de la trajectoire prédéterminée théorique 20 et le ou les opérateurs de l'installation 1 peuvent agir en temps réel sur le missile 2, par l'intermédiaire des chaînes 11, 14, 15 et 12, 14, 15 pour faire en sorte que ladite trajectoire réelle 22 soit aussi proche que possible de la trajectoire prédéterminée théorique 20.

De plus, sur l'écran des dispositifs de visualisation 9 et 10, apparaissent:

- une fenêtre d'écartométrie 23, permettant aux opérateurs de connaître à tout instant du vol du missile 2, la position réelle de celui-ci par rapport à sa position prédéterminée, ainsi que sa tendance à s'éloigner ou à se rapprocher de sa trajectoire prédéterminée théorique. Pour cela, dans la fenêtre d'écartométrie, la position instantanée réelle ou missile 2 est représentée par une croix 24, à laquelle sont associées deux flèches orthogonales 25 et 26, dont la longueur est représentative de la vitesse avec laquelle ledit missile s'écarte ou se rapproche du centre 27 de la fenêtre 23, ledit centre 27 représentant la position instantanée théorique dudit missile 2;

- une fenêtre alphanumérique 28, dans laquelle sont visualisés la date et l'heure du vol, ainsi que, de façon instantanée, l'altitude, la vitesse, l'écart d'altitude par rapport à l'altitude de consigne, la durée du vol, etc....

Ainsi, pendant toute la durée du vol du missile 2, il est possible de connaître tous les paramètres décisifs susceptibles d'aider à prendre une décision d'action sur les chaînes de télécommande 11, 14, 15 et/ou 12, 14, 15, si le missile 2 s'écarte de sa trajectoire théorique prédéterminée 20.

Les chaînes de télécommande 11, 14, 15 et 12, 14, 15 peuvent permettre d'agir sur la direction du missile 2 pour corriger la trajectoire de ce dernier ou pour le faire atterrir. Les ordres possibles sont par exemple virage à droite, virage à gauche et atterrissage. Dans ce dernier cas par exemple, l'altitude n'est pas prise en compte et le missile 2 doit comporter des moyens automatiques pour lui faire respecter une altitude instantanée de consigne.

L'objet de la présente invention est un simulateur permettant de faire fonctionner l'installation des figures 1 et 2, sans nécessiter le tir d'un missile 2.

Le simulateur selon l'invention est intégré à l'installation 1 et il remplit les fonctions normalement remplies par le missile 2, les radars 5 et 6 et l'émetteur de télécommande 14.

Sur la figure 4, on a illustré, en vue schématique comparable à celle de la figure 2, l'incorporation du similateur, désigné par la référence 30, dans ladite installation. On a supposé que le simulateur 30 était disposé à l'intérieur du caisson 4.

Dans le schéma de la figure 4, on a illustré schématiquement quatre commutateurs 31, 32, 33 et 34 à deux positions.

Le commutateur 31 (ou 32), disposé à l'entrée du pupitre radar 7 (ou 8), permet pour l'une de ses positions représentée en trait plein, de relier ledit pupitre radar au radar 5 (ou 6) correspondant et, pour son autre position représentée en pointillés, de relier ledit pupitre radar au simulateur 30 par l'intermédiaire d'une liaison 35 (ou 36).

Par ailleurs, le commutateur 33 (ou 34) disposé à la sortie du pupitre de télécommande 11 (ou 12) permet, pour l'une de ses positions représentée en trait plein, de relier ledit pupitre de télécommande à l'émetteur de télécommande 14 et, pour son autre position représentée en pointillés, de relier ledit pupitre de télécommande au simulateur 30 par l'intermédiaire d'une liaison 37 (ou 38).

Comme illustré par les lignes en traits mixtes, les quatre commutateurs 31 à 34 sont couplés pour basculer simultanément. Ainsi, ils occupent simultanément, soit leurs positions reliant les pupitres radar 7 et 8 aux radars 5 et 6 et les pupitres de télécommande 11 et 12 à l'émetteur de télécommande 14, soit leurs positions reliant les pupitres radar 7 et 8 et les pupitres de télécommande 11 et 12 au simulateur 30.

Sur la figure 4, on a représenté les commutateurs 31 à 34 sous forme de commutateurs mécaniques basculants, mais il va de soi que ce n'est là qu'une représentation schématique et que lesdits commutateurs peuvent avoir toute structure autre appropriée.

Le simulateur 30 effectue différentes tâches. Il:
- engendre une trajectoire programmée, simulée, correspondant à la trajectoire réelle 22 engendrée par l'installation dans son fonctionnement normal, cette trajectoire simulée étant progressivement affichée au fur et à mesure du vol simulé sur les écrans des dispositifs de visualisation graphique 9 et 10, en superposition à la carte 17 et à la trajectoire prédéterminée 20, de sorte que pour l'opérateur regardant l'un desdits écrans tout se passe comme si le fonctionnement de l'installation était réel;
- permet le fonctionnement des pupitres radar 7 et 8 dans toutes les configurations, de recherche ou de poursuite, semblables aux configurations réelles;
- prend en compte les ordres de télécommande émis par les pupitres 11 et/ou 12, en modifiant en conséquence, la trajectoire simulée;
- assure de plus des fonctions d'instructions telles que:
- modification de la trajectoire simulée par introduction de conditions aérologiques simulées;
- modification de la trajectoire simulée par action sur les pupitres de télécommande 11 et 12;
- création de pannes simulées relatives aux radars 5 et 6;
- création de pannes simulées relatives au mobile aérien 2;
- contrôle des réactions des opérateurs.

Toutes les commandes effectuées par un opérateur sur un pupitre radar 7 ou 8 sont prises en compte et traitées par le simulateur 30. Celui-ci les exploite pour modifier les données retransmises aux pupitres radar 7 et 8.

De même, les informations émises par les pupitres de télécommande 11 et 12, actionnés par un ou plusieurs opérateurs, sont prises en compte par le simulateur 30, qui corrige la trajectoire simulée de façon à exécuter les ordres de télécommande émis. Cela entraîne donc un changement des coordonnées des radars, visualisé sur les dispositifs d'affichage 9 et 10.

Dans le mode de réalisation représenté schématiquement sur la figure 5, le simulateur 30 comporte:
- un micro-ordinateur 39, en relation avec des appareils périphériques, tels qu'un clavier 40, un écran 41 et une imprimante 42; et
- un dispositif d'interface 43.

Le dispositif d'interface 43 est en liaison, d'une part, avec le micro-ordinateur 39 et, d'autre part, avec les pupitres radar 7, 8 et les pupitres de télécommande 11, 12, respectivement par l'intermédiaire des liaisons 35, 36 et 37, 38.

Le micro-ordinateur 39 engendre, par programmation, des conditions de vol simulé, notamment une trajectoire simulée, pour le missile 2, sur lesquelles un instructeur peut intervenir en temps réel, grâce au clavier 40, pour modifier les paramètres du vol simulé. En fonctionnement de simulation, la carte 17 et la trajectoire théorique 20 peuvent continuer à être engendrés par le calculateur 16 de l'installation 1. Le micro-ordinateur 39 élabore cycliquement les informations de site, gisement, distance, fonctions du temps et d'éventuelles pannes. Les informations sont transmises au dispositif d'interface 43 qui les stocke dans ses mémoires, les traite, et les expédie aux pupitres radar 7, 8.

Le dispositif d'interface 43 reçoit les ordres élaborés par les pupitres radar 7, 8, sous l'action du ou des opérateurs. Il les traite et modifie en conséquence ses informations de sortie.

Le dispositif d'interface 43 reçoit également les ordres provenant des pupitres de télécommande 11 et 12 et les adresse au micro-ordinateur 39 pour les visualiser et modifier le tracé de la trajectoire simulée, faisant office de trajectoire réelle 22.

Le dispositif d'interface 43 peut présenter une structure en fonctions indépendantes telles que fonction gisement, fonction site, fonction distance, fonction télémétrie, fonction télécommande, etc...

Le clavier 40, l'écran 41 et l'éventuelle imprimante 42 constitue un poste de travail pour un instructeur. Sur l'écran 41 apparaissent la carte 17, la trajectoire théorique 20 et la trajectoire simulée en cours d'élaboration. A chaque instant, l'instructeur peut à l'aide du clavier 40 introduire des modifications dans le tracé de la trajectoire simulée. Ces modifications qui apparaissent également sur les dispositifs d'affichage 9 et 10, doivent entraîner des réactions de la part du ou des opérateurs, qui apportent des modifications de correction. Celles-ci apparaissent sur les dispositifs d'affichage 9 et 10 (à l'usage des opérateurs) et sur l'écran 41, de sorte que l'instructeur peut vérifier la qualite du travail desdits opérateurs.

En fonctionnement simulé, les fenêtres d'écartométrie 23 et la fenêtre alphanumérique 28 apparaissant sur les dispositifs d'affichage 9 et 10 donnent bien entendu les informations concernant le vol simulé, programmé dans le micro-ordinateur 39. Les flèches 25 et 26 sont alors des éléments·de repère de grande importance, puisqu'elles permettent d'une part, à l'opérateur d'évaluer l'importance et le sens des corrections à apporter et, d'autre part, à l'instructeur de vérifier les réactions de l'opérateur.

**Revendications**

1. Simulateur pour une installation (1) destinée à la localisation et au guidage d'un mobile aérien (2) autopropulsé et télécommandé, ladite installation (1) comprenant:
    - des moyens de calcul électronique (16);
    - des moyens pour la localisation en continu dudit mobile (2) au cours de son vol, comportant au moins un radar (5, 6) et un pupitre radar (7, 8), destiné à la commande et à l'exploitation des informations dudit radar;
    - des moyens (9, 10) pour l'affichage de la carte (17) d'une région géographique devant être survolée par ledit mobile (2);
    - des moyens (9, 10) pour l'affichage d'une trajectoire prédéterminée théorique (20) que doit suivre ledit mobile (2) au cours de son vol, ladite trajectoire prédéterminée théorique (20) étant superposée à ladite carte (17);
    - des moyens (9, 10) pour tracer progressivement la trajectoire réelle (22), suivie par ledit mobile (2) au fur et à mesure du déroulement du vol de celui-ci, ladite trajectoire réelle (22) étant superposée à ladite carte (17); et
    - des moyens de télécommande pour agir sur la position dudit mobile (2) en cours de vol, afin que ladite trajectoire réelle (22) soit aussi proche que possible de ladite trajectoire prédéterminée théorique (20), lesdits moyens de télécommande comportant un émetteur (14) et au moins un pupitre de télécommande (11, 12) dudit émetteur, caractérisé en ce qu'il comporte des moyens (39) pour simuler ledit radar (5, 6), ledit mobile aérien (2) et ledit émetteur de télécommande (14) et en ce qu'il peut être relié, à la place dudit radar et dudit émetteur de télécommande respectivement, à l'entrée dudit pupitre radar (7, 8) et à la sortie dudit pupitre de télécommande (11, 12), au moyen d'un système de commutation (31, 32, 33, 34).

2. Simulateur selon la revendication 1, caractérisé en ce qu'il comporte des moyens (39) pour engendrer pas à pas une trajectoire simulée apparaissant à la place de ladite trajectoire réelle (22) en superposition à ladite carte (17) et des moyens (40) pour introduire des modifications inopinées dans ladite trajectoire simulée.

3. Simulateur selon la revendication 2, caractérisé en ce qu'il comporte des moyens d'affichage auxiliaires (41) sur lesquels apparaissent également ladite carte (17), ladite trajectoire théorique prédéterminée (20) et la trajectoire simulée, modifiable par les moyens (40).

4. Simulateur selon l'une des revendications 2 ou 3, caractérisé en ce que lesdits moyens (39) pour engendrer la trajectoire simulée comportent un micro-ordinateur.

5. Simulateur selon l'une des revendications 3 ou 4, caractérisé en ce qu'il comporte un dispositif d'interface (43) en liaison, d'une part, avec ledit micro-ordinateur (39), d'autre part, avec ledit pupitre radar (7, 8) et ledit pupitre de télécommande (11, 12).

6. Installation destinée à la localisation et au guidage d'un mobile aérien (2) autopropulsé télécommandé et comprenant:
    - des moyens de calcul électronique (16);
    - des moyens pour la localisation en continu dudit mobile (2) au cours de son vol, comportant au moins un radar (5, 6) et un pupitre radar (7, 8), destiné à la commande et à l'exploitation des informations dudit radar;
    - des moyens (9, 10) pour l'affichage de la carte (17) d'une region géographique devant être survolée par ledit mobile (2);
    - des moyens (9, 10) pour l'affichage d'une trajectoire prédéterminée théorique (20) que doit suivre ledit mobile (2) au cours de son vol, ladite trajectoire prédéterminée théorique (20) étant superposée à ladite carte (17);
    - des moyens (9, 10) pour tracer progressivement la trajectoire réelle (22), suivie par ledit mobile (2) au fur et à mesure du déroulement du vol de celui-ci, ladite trajectoire réelle (22) étant superposée à ladite carte (17); et
    - des moyens de télécommande pour agir sur la position dudit mobile (2) en cours de vol, afin que ladite trajectoire réelle (22) soit aussi proche que possible de ladite trajectoire prédéterminée théorique (20), lesdits moyens de télécommande comportant un émetteur (14) et au moins un pupitre de télécommande (11 ,12) dudit émetteur, caractérisée en ce qu'elle comporte un simulateur (30) susceptible de simuler ledit radar (5, 6), ledit mobile aérien (2) et ledit émetteur de télécommande (14), ainsi qu'un système de commutation (31, 32, 33, 34) susceptible de relier ledit simulateur à l'entrée dudit pupitre radar (7, 8) et à la sortie dudit pupitre de télécommande (11, 12), respectivement à la place dudit radar et dudit émetteur de télécommande.

7. Installation selon la revendication 6, caractérisée en ce que son simulateur est du type spécifié sous l'une quelconque des revendications 2 à 5.

## Patentansprüche

1. Simulator für eine Einrichtung (1) zur Ortung und Lenkung eines selbstangetriebenen ferngesteuerten Flugkörpers (2), wobei die Einrichtung (1) umfaßt:
- Elektronische Rechner (16);
- Mittel zur kontinuierlichen Ortung des Flugkörpers (2) während seines Fluges, mit wenigstens einem Radar (5, 6) und einem Radarpult (7, 8) zur Bedienung und zur Auswertung der Informationen des Radars;
- Mittel (9, 10) zur Darstellung der Karte (17) einer geographischen Region vor deren Überfliegung durch den Flugkörper (2);
- Mittel (9, 10) zur Darstellung einer vorbestimmten theoretischen Flugbahn (20), welcher der Flugkörper (2) im Verlauf seines Fluges folgen soll, wobei diese vorbestimmte theoretische Flugbahn (20) der Karte (17) überlagert ist;
- Mittel (9, 10) zum laufenden Aufzeichnen der reellen Flugbahn (22), welche der Flugkörper (2) entsprechend der Fortentwicklung seines Fluges zurücklegt, wobei diese reelle Flugbahn (22) der Karte (17) überlagert ist; und
- Fernsteuerungsmittel zur Einwirkung auf die Position des Flugkörpers (2) im Verlauf des Fluges, um die reelle Flugbahn (22) soweit wie möglich an die vorbestimmte theoretische Flugbahn (20) anzunähern, wobei die Fernsteuerungsmittel einen Sender (14) und wenigstens ein Fernsteuerpult (11, 12) des Senders aufweisen,
dadurch gekennzeichnet, daß er Mittel (39) zum Simulieren des Radars (5, 6), des Flugkörpers (2) und des Fernsteuerungssenders (14) aufweist, und daß er anstelle des Radars und des Fernsteuerungssenders mittels einer Schalteinrichtung (31, 32, 33, 34) mit dem Eingang des Radarpults (7, 8) und mit dem Ausgang des Fernsteuerpults (11, 12) verbunden werden kann.

2. Simulator nach Anspruch 1, dadurch gekennzeichnet, daß er Mittel (39) zur schrittweisen Erzeugung einer simulierten Flugbahn, die anstelle der reellen Flugbahn (22) in Überlagerung der Karte (17) erscheint, und Mittel (40) zur Einführung unerwarteter Änderungen der simulierten Flugbahn aufweist.

3. Simulator nach Anspruch 2, dadurch gekennzeichnet, daß er Mittel zur zusätzlichen graphischen Darstellung (41) aufweist, auf denen ebenfalls die Karte (17), die vorbestimmte theoretische Flugbahn (20) und die durch die Mittel (40) veränderbare simulierte Flugbahn (20) erscheinen.

4. Simulator nach einem der Ansprüche 2 oder 3, dadurch gekennzeichnet, daß die Mittel (39) zur Erzeugung einer simulierten Flugbahn einen Mikrorechner aufweisen.

5. Simulator nach einem der Ansprüche 3 oder 4, dadurch gekennzeichnet, daß er eine Interface-Anordnung (43) aufweist in Verbindung einerseits mit dem Mikrorechner (39) und andererseits mit dem Radarpult (7, 8) und dem Fernsteuerpult (11, 12).

6. Einrichtung zur Ortung und Lenkung eines selbstangetriebenen ferngesteuerten Flugkörpers (2), welche umfaßt:
- Elektronische Rechner (16);
- Mittel zur kontinuierlichen Ortung des Flugkörpers (2) während seines Fluges, mit wenigstens einem Radar (5, 6) und einem Radarpult (7, 8) zur Bedienung und zur Auswertung der Informationen des Radars;
- Mittel (9, 10) zur Darstellung der Karte (17) einer geographischen Region vor deren Überfliegung durch den Flugkörper (2);
- Mittel (9, 10) zur Darstellung einer vorbestimmten theoretischen Flugbahn (20), welcher der Flugkörper (2) im Verlauf seines Fluges folgen soll, wobei diese vorbestimmte theoretische Flugbahn (20) der Karte (17) überlagert ist;
- Mittel (9, 10) zum laufenden Aufzeichnen der reellen Flugbahn (22), welche der Flugkörper (2) entsprechend der Fortentwicklung seines Fluges zurücklegt, wobei diese reelle Flugbahn (22) der Karte (17) überlagert ist; und
- Fernsteuerungsmittel zur Einwirkung auf die Position des Flugkörpers (2) im Verlauf des Fluges, um die reelle Flugbahn (22) soweit wie möglich an die vorbestimmte theoretische Flugbahn (20) anzunähern, wobei die Fernsteuerungsmittel einen Sender (14) und wenigstens ein Fernsteuerpult (11, 12) des Senders aufweisen,
dadurch gekennzeichnet, daß sie einen Simulator (30) zum Simulieren des Radars (5, 6), des Flugkörpers (2) und des Fernsteuerungssenders (14) aufweist und daß eine Schalteinrichtung (31, 32, 33, 34) vorgesehen ist, um den Simulator mit dem Eingang des Radarpults (7, 8) und mit dem Ausgang des Fernsteuerpults (11, 12) bzw. mit dem Platz des Radars und des Fernsteuerungssenders zu verbinden.

7. Einrichtung nach Anspruch 6, dadurch gekennzeichnet, daß ihr Simulator nach einem der Ansprüche 2 bis 5 ausgeführt ist.

## Claims

1. Simulator for an installation (1) for locating and guiding a self-propelled, remote-controlled aerial body in motion (2), said installation (1) comprising:
- electronic calculating means (16),
- means for continuously locating said body in motion (2) during its flight, comprising at least one radar (5, 6) and one radar control panel (7, 8), adapted for the control and exploitation of the information from said radar ;
- means (9, 10) for displaying the map (17) of a geographical region having to be flown over by said body in motion (2);
- means (9, 10) for displaying a theoretical predetermined path (20) that said body in motion (2) must follow during its flight, said theoretical predetermined path (20) being superposed on said map (17) ;

- means (9, 10) for progressively plotting the real path (22) followed by said body in motion (2) as its flight progresses, said real path (22) being superposed on said map (17); and

- remote-control means for acting on the position of said body in motion (2) during flight, so that said real path (22) is as close as possible to said theoretical predetermined path (20) , said remote-control means comprising an emitter (14) and at least one remote-control panel (11, 12) of said emitter,

characterized in that it comprises means (30) for simulating said radar (5, 6), said aerial body in motion (2) and said remote-control emitter (14), and in that it may be connected, in place of said radar and said remote-control emitter respectively, at the input of said radar control panel (7, 8) and at the output of said remote-control panel (11, 12), by means of a switching system (31, 32, 33, 34).

2. Simulator according to claim 1, characterized in that it comprises means (39) for producing, step by step, simulated path appearing in place of said real path (22) in superposition on said map (17) and means (40) for introducing unexpected changes in said simulated path.

3. Simulator according to claim 2,

characterized in that it comprises auxiliary display means (41) on which said map (17), said predetermined theoretical path (20) and the simulated path, which may be changed by the means (40) also appear.

4. Simulator according to one of claims 2 or 3, characterized in that said means (39) for producing the simulated path comprise a micro-computer.

5. Simulator according to one of claims 3 or 4, characterized in that it comprises an interface device (43) linked on the one hand with said micro-computer (39) and on the other hand with said radar control panel (7, 8) and said remote-control panel (11, 12).

6. Installation for locating and guiding a selfpropelled, remote controlled aerial body in motion (2), and comprising

- electronic calculating means (16),

- means for continuously locating said body in motion (2) during its flight, comprising at least one radar (5, 6) and one radar control panel (7, 8), adapted for the control and exploitation of the informations from said radar ;

- means (9, 10) for displaying the map (17) of a geographical region having to be flown over by said body in motion (2);

- means (9, 10) for displaying a theoretical predetermined path (20) that said body in motion (2) must follow during its flight, said theoretical predetermined path (20) being superposed on said map (17);

- means (9, 10) for progressively plotting the real path (22) followed by said body in motion (2) as its flight progresses, said real path (22) being superposed on said map (17); and

- remote-control means for acting on the position of said body in motion (2) during flight, so that said real path (22) is as close as possible to said theoretical predetermined path (20), said remote-control means comprising an emitter (14) and at least one remote-control panel (11, 12) on said emitter,

characterized in that it comprises a simulator (30) capable of simulating said radar (5, 6), said aerial body in motion (2) and said remote-control emitter (14) as well as a switching system (31, 32, 33, 34) capable of connecting said simulator to the input of said radar control panel (7, 8) and to the output of said remote-control panel, respectively in place of said radar and said remote-control emitter.

7. Installation according to claim 6,

characterized in that the simulator thereof is of the type according to anyone of claims 2 to 5.

Fig.1

## Fig. 2

## Fig. 3

## Fig.4

## Fig.5